# EUROPÄISCHE PATENTSCHRIFT

(11) **EP 0 839 884 B1**
(45) Veröffentlichungstag und Bekanntmachung des Hinweises auf die Patenterteilung: **17.05.2000**
(21) Anmeldenummer: 97115868.8
(22) Anmeldetag: 12.09.1997
(51) Int. Cl.: C09D 167/00

(54) **Wärmehärtbare Beschichtungsmassen**
Heat-curable coating compositions
Compositions de revêtement thermodurcissables

(30) Priorität: 30.10.1996 DE 19643914
(43) Veröffentlichungstag der Anmeldung: 06.05.1998
(73) Patentinhaber: EMS-INVENTA AG, 8002 Zürich (CH)
(72) Erfinder: Kaplan, Andreas, Dr.rer.nat., 7000 Chur (CH); Wenzler, Manfred, Dipl.Ing.Chem.HTL., 7013 Domat/EMS (CH)
(74) Vertreter: Pfenning, Meinig & Partner

(56) Entgegenhaltungen:
- EP-A- 0 649 890
- WO-A-94/03545
- US-A- 3 555 117

## Beschreibung

Die vorliegende Erfindung betrifft wärmehärtbare Beschichtungsmassen, insbesondere Pulverlacke mit einem speziell ausgewählten Stabilisator.

Pulverlacke, die als Bindemittel carboxylfunktionelle Polyester und β-Hydroxyalkylamide enthalten, sind bereits seit längerem bekannt.

US 4'801'680 beschreibt Pulverlacke auf Basis von carboxylfunktionellen Polyestern und β-Hydroxyalkylamiden, wobei der Polyester einen Tg im Bereich von 30°C bis 85°C aufweist und das Äquivalentverhältnis von β-Hydroxyalkylamid-Äquivalenten zu Carbonsäure-Äquivalenten im Bereich von 0,6 bis 1,6:1 liegt.

Toxikologisch unbedenkliche Pulverlacke auf Basis von carboxylfunktionellen Polyestern und β-Hydroxylalkylamiden zeigen neben hervorragenden mechanischen Eigenschaften auch sehr gute Witterungsstabilität und sind daher für den Einsatz im Außenbereich geeignet.

Als Nachteil ist die im Vergleich zu Pulverlacken auf Basis carboxylfunktioneller Polyester und Trisglycidyl-Isocyanurat (TGIC) geringere Vergilbungsstabilität von Pulverlacken auf Basis von carboxylfunktionellen Polyestern und β-Hydroxylalkylamiden in direkt gas- und oder ölbeheizten Öfen anzusehen. Bei direkt gas- und/oder ölbeheizten Öfen sind die beschichteten Teile während des Härtungsvorgangs in direktem Kontakt mit den Verbrennungsgasen der gas- und/oder ölbeheizten Brenner. Dies führt bei Pulverlacken auf Basis von carboxylfunktionellen Polyestern und β-Hydroxyalkylamiden zu einer im Vergleich zu Pulverlakken auf Basis carboxylfunktioneller Polyester und Trisglycidyl-Isocyanurat (TGIC) stärkeren Vergilbung des gehärteten Pulverlackfilmes.

Ziel der vorliegenden Erfindung ist es, diesen Nachteil der geringeren Stabilität von Pulverlacken auf Basis von carboxylfunktionellen Polyestern und β-Hydroxyalkylamiden in direkt gas- und/oder ölbeheizten Öfen zu beseitigen.

Diese Aufgabe wird durch die kennzeichnenden Merkmale des Anspruches 1 gelöst. Vorteilhafte Weiterbildungen der Erfindung sind in den Unteransprüchen angegeben.

Überraschenderweise zeigt sich, daß durch den Zusatz von speziell ausgewählten Stabilisatoren der Nachteil der geringeren Vergilbungsstabilität von Pulverlacken auf Basis von carboxylfunktionellen Polyestern und β-Hydroxyalkylamiden in direkt gas- und/oder ölbeheizten Öfen beseitigt werden kann. Erfindungsgemäß werden dazu die Verbindungen der allgemeinen Formeln I-X eingesetzt. Die Beschichtungsmasse besteht demnach aus:
(A) einem carboxylfunktionellem Polyester, hergestellt durch eine Kondensationsreaktion aus aliphatischen und/oder cycloaliphatischen Polyolen mit aliphatischen und/oder cycloaliphatischen und/oder aromatischen Polycarbonsäuren und Anhydriden, wobei der Polyester einen Tg im Bereich von 30°C bis 80°C und eine Säurezahl von etwa 20 bis 100 (mg KOH/g) aufweist, und
(B) einen β-Hydroxyalkylamid, wobei das Äquivalentverhältnis von β-Hydroxyalkylamid-Äquivalenten zu Carbonsäure-Äquivalenten im Bereich von 0,6 bis 1,6 : 1 liegt, und
(C) mindestens einer Verbindung der Formel I-X oder deren Mischungen. Die Verbindungen der Formeln I-X sind nachfolgend wiedergegeben: 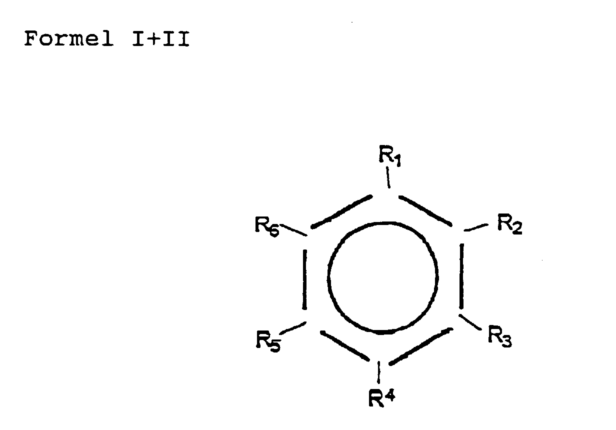
   - I:: R₁=OH, R₂=OR₇, R₃, R₄, R₅, R₆, R₇=H oder C₁-C₁₀-Alkyl und/oder Halogenatom
   - II:: R₁=OH, R₄=OR₇, R₂, R₃, R₅, R₆, R₇=H oder C₁-C₁₀-Alkyl und/oder Halogenatom 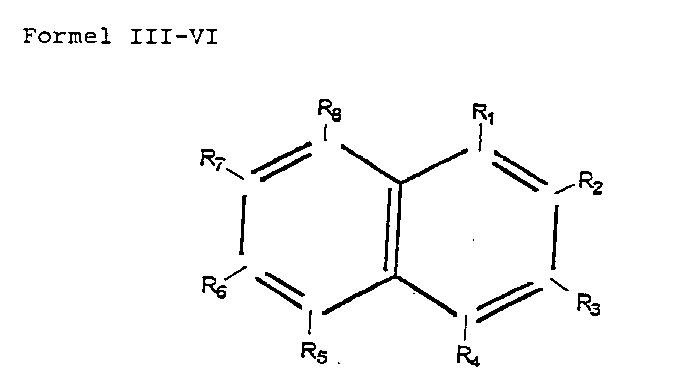
   - III:: R₁=OH, R₂=OR₉, R₃, R₄, R₅, R₆, R₇, R₈, R₉=H oder C₁-C₁₀-Alkyl und/oder Halogenatom
   - IV:: R₁=OH, R₄=OR₉,R₂,R₃,R₅,R₆,R₇,R₈,R₉=H oder C₁-C₁₀-Alkyl und/oder Halogenatom
   - V:: R₁=OH,R₈=OR₉,R₂,R₃,R₄,R₅,R₆,R₇,R₉=H oder C₁-C₁₀-Alkyl und/oder Halogenatom
   - VI :: R₂=OH,R₆=OR₉,R₂,R₃,R₄,R₅,R₇,R₈,R₉=H oder C₁-C₁₀-Alkyl und/oder Halogenatom 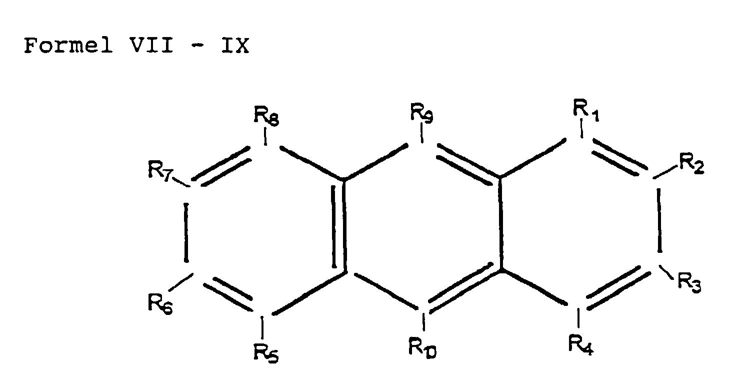
   - VII:: R₁=OH,R₄=OR₁₁,R₂,R₃,R₅,R₆,R₇,R₈,R₉,R₁₀,R₁₁=H oder C₁-C₁₀-Alkyl und/oder Halogenatom
   - VIII:: R₂=OH,R₆=OR₁₁,R₁,R₃,R₄,R₅,R₇,R₈,R₉,R₁₀,R₁₁=H oder C₁-C₁₀-Alkyl und/oder Halogenatom
   - IX:: R₉=OH,R₁₀=OR₁₁,R₁,R₂,R₃,R₄,R₅,R₆,R₇,R₈,R₁₁=H oder C₁-C₁₀-Alkyl und/oder Halogenatom 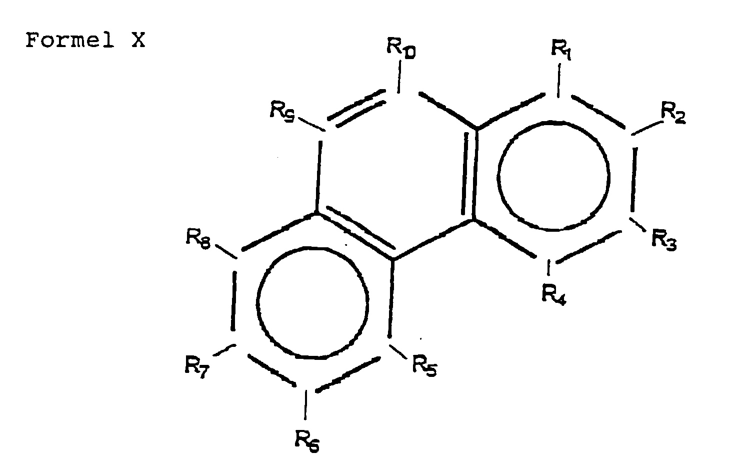
   - X:: R₉=OH,R₁₀=OR₁₁,R₁,R₂,R₃,R₄,R₅,R₆,R₇,R₈,R₁₁=H oder C₁-C₁₀-Alkyl und/oder Halogenatom und gegebenfalls Pigmente und/oder Füllstoffe und/oder Hitzestabilisatoren, bevorzugt Phosphate und/oder Triboadditive und/oder weitere Additive wie z.B. Verlauf- und Entgasungsmittel. Bei dem Rest R₁ können verzweigte und/oder geradkettige C₁-C₁₀-Alkyle verwendet werden.

Bei den Verbindungen I-X sind Hydrochinon, Toluolhydrochinon und Trimethylhydrochinon besonders bevorzugt.

Es ist dabei von Vorteil, wenn der Anteil der Verbindung I-X auf der Gesamtmasse zwischen 0,001 Gew.-%, besonders bevorzugt 0,01, und 5 Gew.-% liegt.

Geeignete carboxylfunktionelle Polyester können nach den für Polyestern bekannten Kondensationsverfahren (Veresterung und/oder Umesterung) nach dem Stand der Technik hergestellt werden. Auch geeignete Katalysatoren, wie z.B. Dibutylzinnoxid oder Titantetrabutylat, können gegebenenfalls verwendet werden.

Carboxylfunktionelle Copolyester enthalten als Säurekomponenten hauptsächlich aromatische mehrbasische Carbonsäuren, wie z.B. Terephthalsäure, Isophthalsäure, Phthalsäure, Pyromellithsäure, Trimellithsäure, 3,6-Dichlorphthalsäure, Tetrachlorphthalsäure, und, soweit verfügbar, deren Anhydrid, Chlorid oder Ester. Meistens enthalten sie mindestens 50 Mol-% Terephthalsäure und/oder Isophthalsäure, bevorzugt 80 Mol-%. Der Rest der Säuren (Differenz zu 100 Mol-%) besteht aus aliphatischen und/oder cycloaliphatischen mehrbasischen Säuren, wie z.B. 1,4-Cyclohexandicarbonsäure, Tetrahydrophthalsäure, Hexachlorophthalsäure, Azelainsäure, Sebazinsäure, Decandicarbonsäure, Adipinsäure, Dodecandicarbonsäure, Bernsteinsäure, Maleinsäure oder dimere Fettsäuren, Hydroxycarbonsäuren und/oder Lactone, wie z.B. 12-Hydroxystearinsäure, Epsilon-Caprolacton oder Hydroxypivalinsäureester des Neopentylglykols, können ebenfalls verwendet werden.

In geringen Mengen kommen auch Monocarbonsäuren, wie z.B. Benzoesäure, Tertiärbutylbenzoesäure, Hexahydrobenzoesäure und gesättigte aliphatische Monocarbonsäuren zum Einsatz.

Als geeignete Alkoholkomponenten seien aliphatische Diole genannt, wie z.B. Ethylenglykol, 1,3-Propandiol, 1,2-Butandiol, 1,3-Butandiol, 1,4-Butandiol, 2,2-Dimethylpropandiol-1,3 (Neopentylglykol), 2,5-Hexandiol, 1,6-Hexandiol, 2,2-[Bis-(4-hydroxycyclohexal)]propan, 14-Dimethylolcyclohexan, Diethylenglykol, Dipropylenglykol und 2,2-Bis-[4-(2-hydroxy)]phenylpropan. In geringeren Mengen kommen auch Polyole zum Einsatz, wie z.B. Glycerol, Hexantriol, Pentaeryltritol, Sorbitol, Trimethylolethan, Trimethylolpropan und Tris(2-hydroxy)isocyanurat.

Auch Epoxidverbindungen können anstelle von Diolen oder Polyolen verwendet werden. Bevorzugt beträgt der Anteil an Neopentylglykol und/oder Propylenglykol in der Alkoholkomponente mindestens 50 Mol-%, bezogen auf Gesamtsäuren.

Die verwendeten β-Hydroxyalkylamide der erfindungsgemäßen Beschichtungsmasse müssen mindestens zwei β-Hydroxyalkylamidgruppen pro Molekül enthalten und sind im wesentlichen durch folgende Formel (XI) charakterisiert: 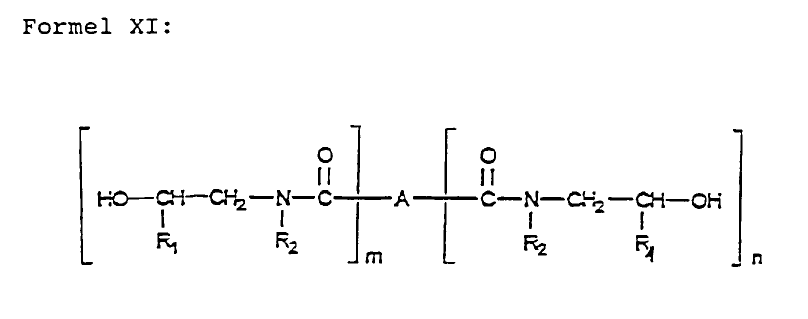 in der R₁ Wasserstoff oder C₁-C₅-Alkyl ist, R₂ ist Wasserstoff, C₁-C₅-Alkyl oder 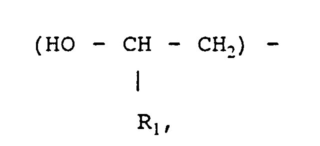 in der R₁ die zuvor angegebene Bedeutung hat und A eine chemische Bindung ist oder eine einwertige oder mehrwertige organische Gruppe, abgeleitet aus gesättigten, ungesättigten oder aromatischen Kohlenwasserstoffgruppen, einschließlich substituierter Kohlenwasserstoffgruppen mit 2 bis 20 Kohlenstoffatomen, m ist 1 bis 2, n ist 0 bis 2 und m+n ist mindestens 2.

Für die erfindungsgemäße Beschichtungsmasse sind besonders bevorzugte β-Hydroxylalkylamide
- Bis[N,N'-di(β-hydroxyethyl]-adipamid
- Bis[N,N'-di(β-hydroxypropyl)]-adipamid.

Die Herstellung der β-Hydroxylalkylamide erfolgt in bekannter Weise durch Umsatz der Ester der entsprechenden Dicarbonsäure mit Alkanolaminen in der Wärme.

Das Äquivalentverhältnis von β-Hydroxyalkylamid-Äquivalenten zu Carbonsäure-Äquivalenten liegt im Bereich von 0,6 bis 1,6 : 1.

Für die Herstellung von Pulverlacken können die üblichen Pigmente und/oder Füllstoffe und/oder Additive verwendet werden. Dabei handelt es sich um Additive aus der Gruppe Beschleuniger, Verlauf- und Entgasungsmittel, Hitze-, UV- und/oder HALS-Stabilisatoren und/oder Triboadditive sowie erforderlicherweise um Mattierungsmittel, wie z.B. Wachse. Die Herstellung von Pulverlacken erfolgt vorzugsweise in der Schmelze durch gemeinsame Extrusion sämtlicher Formulierungsbestandteile bei Temperaturen zwischen 60 bis 140°C. Das Extrudat wird anschließend abgekühlt, gemahlen und auf eine Korngröße < 90 µm abgesiebt. Grundsätzlich sind auch andere Verfahren zur Herstellung der Pulverlacke geeignet, wie z.B. Vermischen der Formulierungsbestandteile in Lösung und anschließende Ausfällung oder destillative Entfernung der Lösemittel. Die Applikation der erfindungsgemäßen Pulverlacke erfolgt nach den für Pulverlacke üblichen Verfahren, z.B. mittels elektrostatischer Sprühvorrichtungen (Corona oder Tribo) oder nach dem Wirbelbettverfahren.

Die Vergilbungsbeständigkeitsprüfung im Labor erfolgt derart, daß in einem Elektroofen die mit Pulverlack beschichteten Bleche gehärtet werden, wobei eine Mischung, bestehend aus Natriumnitrit und 30%-iger Essigsäure, als Lieferant für nitrose Gase dient. Anschließend werden die Farbänderungen des Pulverlackfilms gegenüber einem Pulverlackfilm, der nur im Elektroofen ohne nitrose Gase gehärtet wurde, mit einem LAB-System bestimmt.

### Vergleichsbeispiel

553,85 g Grilesta V76-42 (carboxylfunktioneller Copolyester der Firma UCB (B) mit einer Säurezahl von 33 [mgKOH/g] und einem Tg von ca. 60°C), 29,15 g Primid XL 552 (Bis[N,N'-di(β-hydroxylethyl)]-adipamid der Firma EMS-Chemie AG (CH), 400 g Kronos C1 2160 (TiO₂ der Firma Kronos (D), 8 g Resiflow PV 88 (Verlaufmittel auf Polyacrylat-Basis, Handelsprodukt der Firma Worleé-Chemie GmbH), 7,0 g Irgafos PEPQ (phosphithaltiger Hitzestabilisator der Firma Ciba (CH), und 2 g Benzoin werden in einem Henschelmischer bei 700 Upm während 30 sec trocken gemischt und anschließend auf einem Buss-Co-Kneter (PLK 46) bei einer Manteltemperatur von 100°C gekühlter Schnecke und einer Schneckenumdrehung von 150 Upm extrudiert. Das Extrudat wird gekühlt, gemahlen und auf < 90 µm abgesiebt.

Die Pulverlacke werden elektrostatisch (Corona oder Tribo) auf Aluminiumbleche (Q-panel AL-36 5005 H 14/08 (0,8 mm) appliziert und bei einer Einbrenntemperatur von 180°C und einer Einbrennzeit von 30 min im Elektroofen UT6060 der Firma Heraeus (D), der, kurz bevor die beschichteten Aluminiumbleche hineingebracht werden, mit einem Gemisch von 0,5 g Natriumnitrit und 1,25 g einer 30%-igen Essigsäure bestückt wurde, ausgehärtet. Als Referenz wird im Elektroofen bei denselben Einbrennbedingungen ohne nitrose Gase gehärtet und die Farbänderung mit dem Farbmessgerät Glorpen der Firma Dr. Lange (D) bestimmt. Die Schichtdicke beträgt ca. 60 µm.

Tabelle 1 zeigt die Vergilbungseigenschaften.

### Beispiel 1

552,9 g Grilesta V 76-42 (carboxylfunktioneller Copolyester der Firma UCB (B) mit einer Säurezahl von 33 [mgKOH/g] und einem Tg von ca. 60°C), 29,1 g Primid XL 552 (Bis[N,N'-di(β-hydroxyethyl)]-adipamid der Firma EMS-Chemie AG (CH), 1,0 g Hydrochinon, 400 g Kronos C1 2160 (TiO2 der Fa. Kronos (D), 8 g Resiflow PV 88 (Verlaufmittel auf Polyacrylat-Basis, Handelsprodukt der Firma Worleé-Chemie GmbH), 7,0 g Orgafos PEPQ (phosphithaltiger Hitzestabilisator) der Firma Ciba (CH) und 2 g Benzoin werden analog dem Vergleichsbeispiel zu Pulverlack verarbeitet und geprüft.

Tabelle 1 zeigt die Vergilbungseigenschaften.

### Beispiel 2

552,9 g Grilesta V 76-42 (carboxylfunktioneller Copolyester der Firma UCB (B) mit einer Säurezahl von 33 mgKOH/g] und einem Tg von ca. 60°C), 29,1 g Primid XL 552 (Bis[N,N'-di(β-hydroxyethyl)]-adipamid der Firma EMS-Chemie AG (CH), 1,0 g Toluhydrochinon, 400 g Kronos C1 2160 (TiO2 der Firma Kronos (D), 8 g Resiflow PV 88 (Verlaufmittel auf Polyacrylat-Basis, Handelsprodukt der Firma Worleé-Chemie GmbH), 7,0 g Irgafos PEPQ (phosphithaltiger Hitzestabilisator) der Firma Ciba (CH) und 2 g Benzoin werden analog dem Vergleichsbeispiel zu Pulverlack verarbeitet und geprüft.

Tabelle 1 zeigt die Vergilbungseigenschaften.

### Beispiel 3

552,9 g Grilesta V 76-42 (carboxylfunktioneller Copolyester der Firma UCB (B) mit einer Säurezahl von 33 [mgKOH/g] und einem Tg von ca. 60°C), 29,1 g Primid XL 552 (Bis[N,N'-di(β-hydroxyethyl)]-adipamid der Firma EMS-Chemie AG (CH), 1,0 g Trimethylhydrochinon, 400 g Kronos C1 2160 (TiO2 der Firma Kronos (D), 8 g Resiflow PV 88 (Verlaufmittel auf Polyacrylat-Basis, Handelsprodukt der Firma Worleé-Chemie GmbH), 7,0 g Irgafos PEPQ (phosphithaltiger Hitzestabilisator) der Firma Ciba (CH) und 2 g Benzoin werden analog dem Vergleichsbeispiel zu Pulverlack verarbeitet und geprüft.

Tabelle 1 zeigt die Vergilbungseigenschaften.

**Tabelle 1**

| | Weißgrad n. Berger/Elektroofen | Weißgrad n. Berger/Elektroofen und nitrose Gase | Farbdifferenz delta E Elektroofen und nitrose Gase / Elektroofen |
|---|---|---|---|
| Vergleichsbeispiel | **86** | **82** | **4,5** |
| Beispiel 1 | **86** | **82** | **1,3** |
| Beispiel 2 | **86** | **82** | **1,2** |
| Beispiel 3 | **86** | **82** | **1,4** |

## Patentansprüche

1. Wärmehärtende Beschichtungsmassen, enthaltend
(A) einen carboxylfunktionellen Polyester, hergestellt durch eine Kondensationsreaktion aus aliphatischen und/oder cycloaliphatischen Polyolen mit aliphatischen und/oder cycloaliphatischen und/oder aromatischen Polycarbonsäuren und Anhydriden, wobei der Polyester einen Tg im Bereich von 30° C bis 80° C und eine Säurezahl von etwa 20 bis 100 (mg KOH/g) aufweist, und
(B) einen β-Hydroxyalkylamid, wobei das Equivalentverhältnis von β-Hydroxyalkylamidequivalenten zu Carbonsäureequivalenten im Bereich von 0,6 bis 1,6:1 liegt, und
(C) mindestens eine Verbindung der nachfolgenden allgemeinen Formeln (I)-(X) oder deren Mischungen, mit folgendem Aufbau 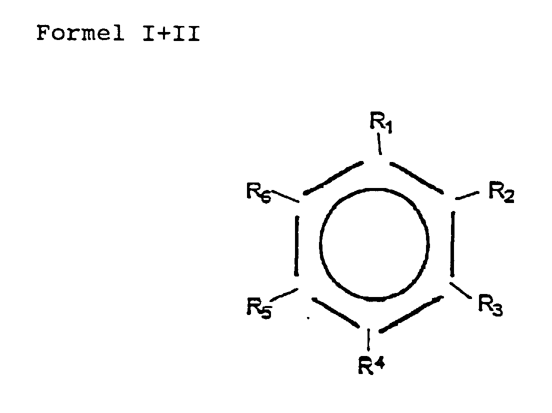
I: mit R₁=OH, R₂=OR₇, R₃, R₄, R₅,R₆, R₇=H oder C₁-C₁₀-Alkyl und/oder Halogenatom
II: mit R₁=OH,R₄=OR₇,R₂,R₃,R₅,R₆,R₇=H oder C₁-C₁₀-Alkyl und/oder Halogenatom 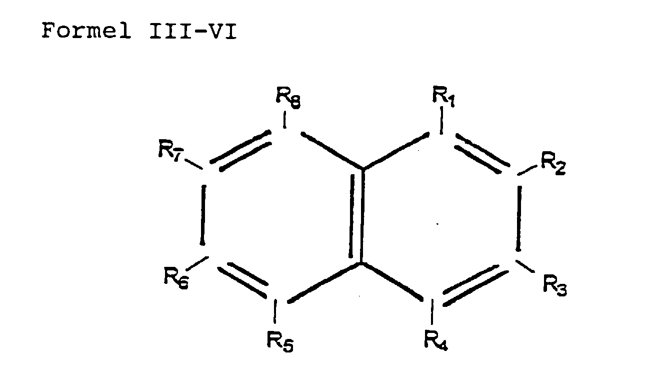
III: mit R₁=OH,R₂=OR₉,R₃,R₄,R₅,R₆,R₇,R₈,R₉=H oder C₁-C₁₀-Alkyl und/oder Halogenatom
IV: mit R₁=OH,R₄=OR₉,R₂,R₃,R₅,R₆,R₇,R₈,R₉=H oder C₁-C₁₀-Alkyl und/oder Halogenatom
V: mit R₁=OH,R₈=OR₉,R₂,R₃,R₄,R₅,R₆,R₇,R₉=H oder C₁-C₁₀-Alkyl und/oder Halogenatom
VI: mit R₂=OH,R₆=OR₉,R₂,R₃,R₄,R₅,R₇,R₈,R₉=H oder C₁-C₁₀-Alkyl und/oder Halogenatom 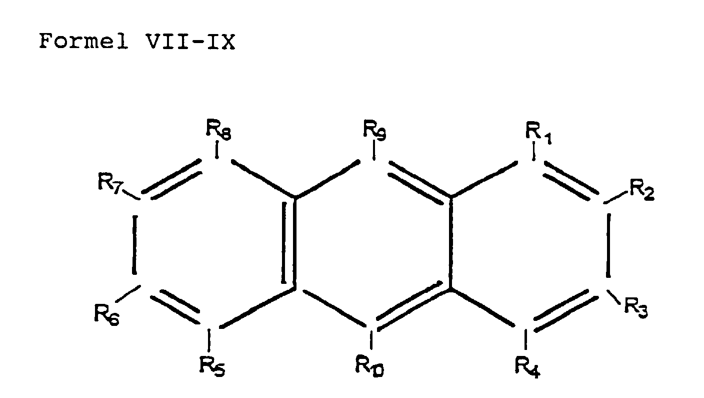
VII: mit R₁=OH,R₄=OR₁₁,R₂,R₃,R₅,R₆,R₇,R₈,R₉,R₁₀,R₁₁=H oder C₁-C₁₀-Alkyl und/oder Halogenatom
VIII: mit R₂=OH,R₆=OR₁₁,R₁,R₃,R₄,R₅,R₇,R₈,R₉,R₁₀,R₁₁=H oder C₁-C₁₀-Alkyl und/oder Halogenatom
IX: mit R₉=OH, R₁₀=OR₁₁, R₁, R₂, R₃, R₄, R₅, R₆, R₇, R₈, R₁₁=H oder C₁-C₁₀-Alkyl und/oder Halogenatom 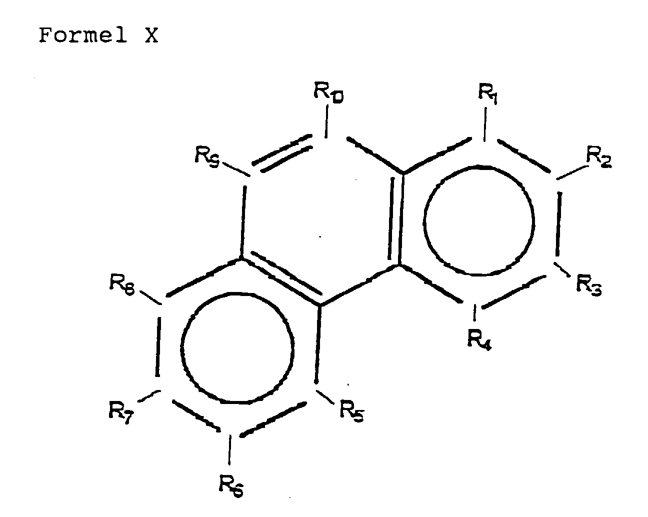
X: mit R₉=OH,R₁₀=OR₁₁,R₁,R₂,R₃,R₄,R₅,R₆,R₇,R₈,R₁₁=H oder C₁-C₁₀-Alkyl und/oder Halogenatom,
und gegebenfalls Pigmente und/oder Füllstoffe und/oder Hitzestabilisatoren, bevorzugt Phosphate und/oder Triboadditive und/oder weitere Additive wie z.B. Verlauf- und Entgasungsmittel.

2. Wärmehärtbare Beschichtungsmassen nach
Anspruch 1,
dadurch gekennzeichnet, daß der Anteil der Verbindungen (I) bis (X), bezogen auf die Gesamtmasse zwischen 0,001 Gew.-% und 10 Gew.-%, bevorzugt zwischen 0,01 und 5 Gew.-% beträgt.

3. Wärmehärtbare Beschichtungsmassen nach Anspruch 1 oder 2,
dadurch gekennzeichnet, daß von den Verbindungen (I) bis (X) Hydrochinon, Toluhydrochinon und Trimethylhydrochinon bevorzugt sind.

4. Wärmehärtbare Beschichtungsmassen nach einem der Ansprüche 1 bis 3,
dadurch gekennzeichnet, das daß β-Hydroxyalkylamid die Formel aufweist 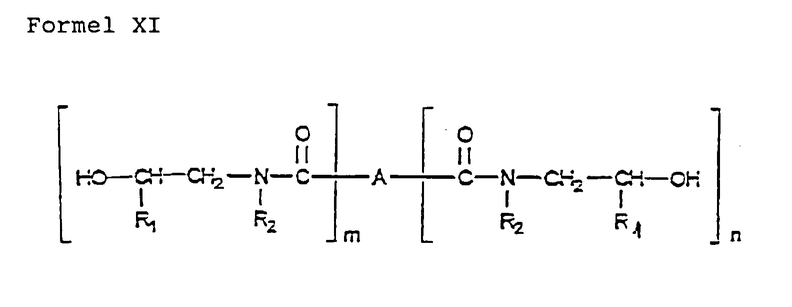 in der R₁ Wasserstoff oder C₁-C₅-Alkyl ist, R₂ Wasserstoff, C₁-C₅-Alkyl oder 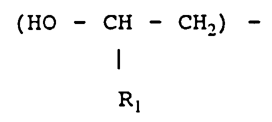 ist,
in der R₁ die zuvor angegebene Bedeutung hat und A eine chemische Bindung ist oder eine einwertige oder mehrwertige organische Gruppe, abgeleitet aus gesättigten, ungesättigten oder aromatischen Kohlenwasserstoffgruppen, einschließlich substituierter Kohlenwasserstoffgruppen mit 2 bis 20 Kohlenstoffatomen, m 1 bis 2 ist, n 0 bis 2 ist und m+n mindestens 2 ist.

5. Wärmehärtbare Beschichtungsmassen nach einem der Ansprüche 1 bis 4,
dadurch gekennzeichnet, daß die bevorzugten β-Hydroxyalkylamide
- Bis[N,N'-di(β-hydroxyethyl]-adipamid
- Bis[N,N'-di(β-hydroxypropyl)]-adipamid
sind.

6. Verfahren zur Herstellung von Pulverlacken, dadurch gekennzeichnet, daß man in der Schmelze durch gemeinsame Extrusion sämtlicher Formulierungsbestandteile der Beschichtungsmassen nach einem der Ansprüche 1 bis 5 sowie zusätzlich übliche Pigmente und/oder Füllstoffe und/oder Additive bei Temperaturen zwischen 60 und 140°C ein Extrudat herstellt, dieses anschließend abkühlt, mahlt und auf eine Korngröße von < 90 µm absiebt.

7. Verwendung der Beschichtungsmassen nach einem der Ansprüche 1 bis 6 als Schutzschichten.

## Claims

1. Heat-curing coating materials, comprising
(A) a carboxyl-functional polyester prepared by a condensation reaction of aliphatic and/or cycloaliphatic polyols with aliphatic and/or cycloaliphatic and/or aromatic polycarboxylic acids and anhydrides, where the polyester has a Tg in the range from 30°C to 80°C and an acid number of from about 20 to 100 [mg of KOH/g], and
(B) a β-hydroxyalkylamide, where the equivalents ratio of β-hydroxyalkylamide equivalents to carboxylic acid equivalents lies within the range from 0.6 to 1.6:1, and
(C) at least one compound of the general formulae (I) (X) below or mixtures thereof, having the following structure 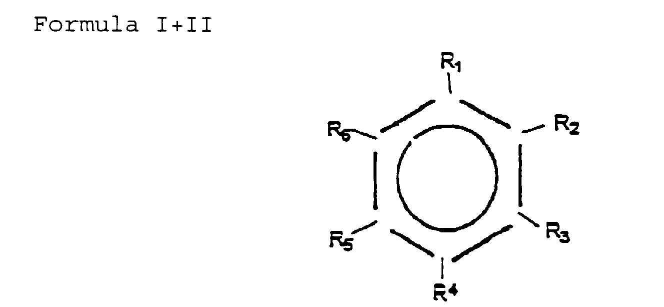
I: with R₁ = OH, R₂ = OR₇, R₃, R₄, R₅, R₆, R₇ = H or C₁-C₁₀-alkyl and/or halogen atom
II: with R₁ = OH, R₄ = OR₇, R₂, R₃ R₅, R₆, R₇ = H or C₁-C₁₀-alkyl and/or halogen atom 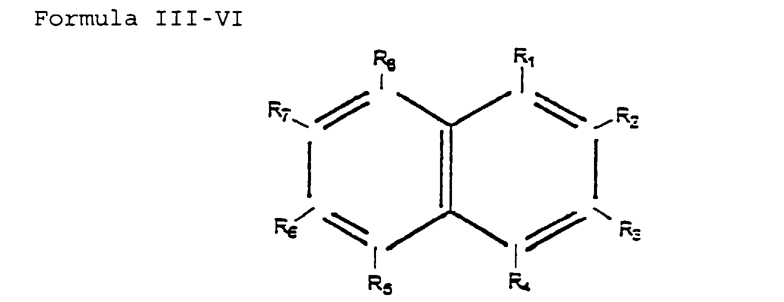
III: with R₁ = OH, R₂ = OR₉, R₃, R₄, R₅, R₆, R₇, R₈, R₉ = H or C₁-C₁₀-alkyl and/or halogen atom
IV: with R₁ = OH, R₄ = OR₉ R₂, R₃, R₅, R₆, R₇, R₈, R₉ = H or C₁-C₁₀-alkyl and/or halogen atom
V: with R₁ = OH, R₈ = OR₉ R₂, R₃, R₄, R₅, R₆, R₇, R₉ = H or C₁-C₁₀-alkyl and/or halogen atom
VI: with R₂ = OH, R₆ = OR₉ R₂, R₃, R₄, R₅, R₇, R₈, R₉ = H or C₁-C₁₀-alkyl and/or halogen atom 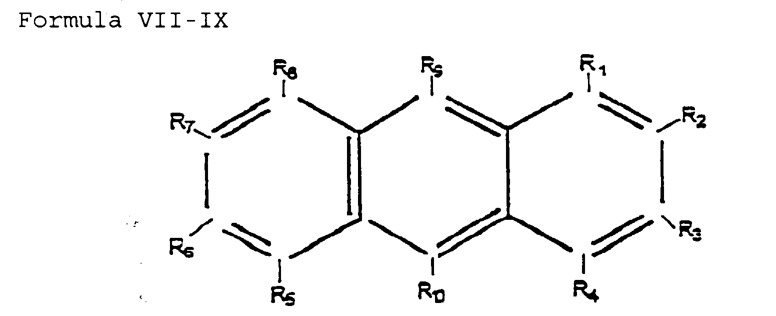
VII: with R₁ = OH, R₄ = OR₁₁ R₂, R₃, R₅, R₆, R₇, R₈, R₉, R₁₀, R₁₁ = H or C₁-C₁₀-alkyl and/or halogen atom
VIII: with R₂ = OH, R₆ = OR₁₁ R₁, R₃, R₄, R₅, R₇, R₈, R₉, R₁₀, R₁₁ = H or C₁-C₁₀-alkyl and/or halogen atom
IX: with R₉ = OH, R₁₀ = OR₁₁ R₁, R₂, R₃, R₄, R₅, R₆, R₇, R₈, R₁₁ = H or C₁-C₁₀-alkyl and/or halogen atom 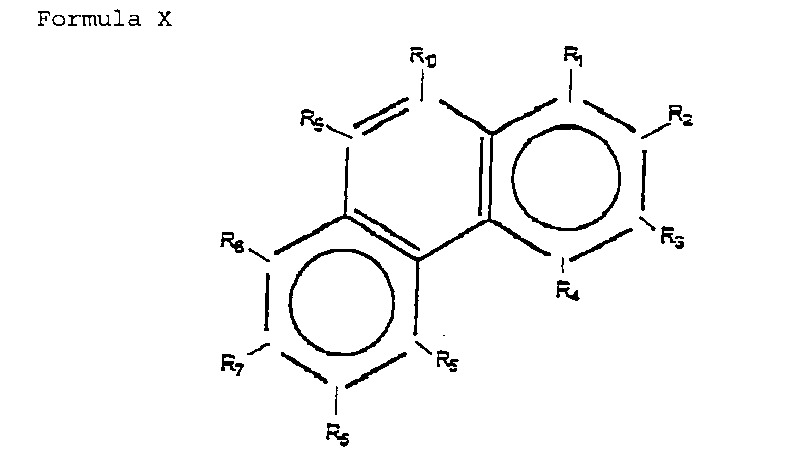
X: with R₉ = OH, R₁₀ = OR₁₁ R₁, R₂, R₃, R₄, R₅, R₆, R₇, R₈, R₁₁ = H or C₁-C₁₀-alkyl and/or halogen atom,
and, if desired, pigments and/or fillers and/or heat stabilizers, preferably phosphates and/or triboadditives and/or further additives, such as, for example, levelling agents and devolatilizing agents.

2. Heat-curable coating materials according to Claim 1,
characterized in that the proportion of the compounds (I) to (X), based on the overall material, is between 0.001% by weight and 10% by weight, preferably between 0.01 and 5% by weight.

3. Heat-curable coating materials according to Claim 1 or 2,
characterized in that among the compounds (I) to (X) preference is given to hydroquinone, toluhydroquinone and trimethylhydroquinone.

4. Heat-curable coating materials according to one of Claims 1 to 3,
characterized in that the β-hydroxyalkylamide has the formula 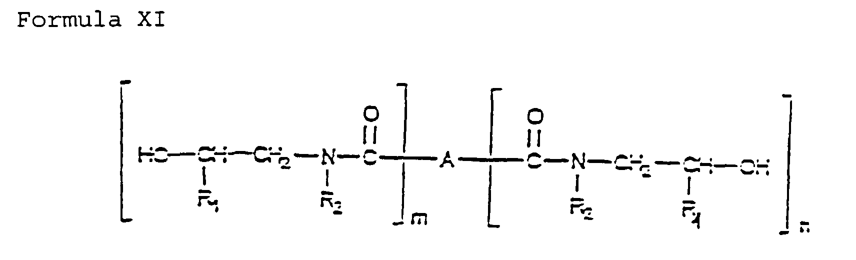 in which R₁ is hydrogen or C₁-C₅-alkyl, R₂ is hydrogen, C₁-C₅-alkyl or 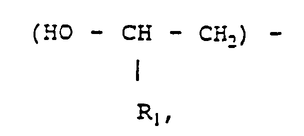 in which R₁ is as defined above, and A is a chemical bond or a monovalent or polyvalent organic group derived from saturated, unsaturated or aromatic hydrocarbon groups, including substituted hydrocarbon groups having 2 to 20 carbon atoms, m is 1 or 2, n is from 0 to 2 and m + n is at least 2.

5. Heat-curable coating materials according to one of Claims 1 to 4, characterized in that the preferred β-hydroxyalkylamides are
- bis [N,N'-di(β-hydroxyethyl] adipamide
- bis [N,N'-di(β-hydroxypropyl] adipamide.

6. Process for preparing powder coating materials, characterized in that all of the formulation constituents of the coating materials according to one of Claims 1 to 5 and, in addition, customary pigments and/or fillers and/or additives are subjected to conjoint extrusion in the melt at temperatures between 60 and 140°C to prepare an extrudate, which is subsequently cooled, ground and screened to a particle size of < 90 µm.

7. Use of the coating materials according to one of Claims 1 to 6 as protective coats.

## Revendications

1. Masses de revêtement durcissables, contenant
(A) un polyester à fonction carboxylique, produit au moyen d'une réaction de condensation de polyols aliphatiques et/ou cycloaliphatiques avec des polyacides carboxyliques et anhydrides aliphatiques et/ou cycloaliphatiques et/ou aromatiques, le polyester présentant une Tg dans la plage de 30°C à 80°C et un indice d'acide d'environ 20 à 100 (mg de KOH/g), et
(B) un β-hydroxyalkylamide, le rapport en équivalent des équivalents de β-hydroxyalkylamide aux équivalents d'acide carboxylique étant dans la gamme de 0,6/l à 1,6/l, et
(C) au moins un composé des formules générales suivantes I à X ou un de leurs mélanges, avec la structure suivante 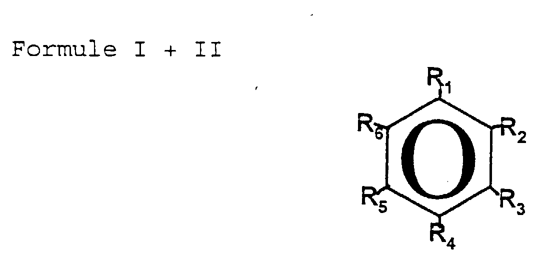
I : avec R₁ = OH, R₂ = OR₇, R₃, R₄, R₅, R₆, R₇ = H ou un groupe alkyle en C₁ à C₁₀, et/ou un atome d'halogène
II : avec R₁ = OH, R₄ = OR₇, R₂, R₃, R₅, R₆, R₇ = H ou un groupe alkyle en C₁ à C₁₀, et/ou un atome d'halogène 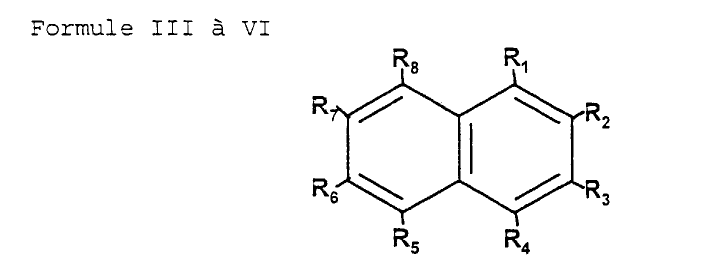
III: avec R₁ = OH, R₂ = OR₉, R₃, R₄, R₅, R₆, R₇, R₈, R₉ = H ou un groupe alkyle en C₁ à C₁₀, et/ou un atome d'halogène
IV : avec R₁ = OH, R₄ = OR₉, R₂, R₃, R₅, R₆, R₇, R₈, R₉ = H ou un groupe alkyle en C₁ à C₁₀, et/ou un atome d'halogène
V : avec R₁ = OH, R₈ = OR₉, R₂, R₃, R₄, R₅, R₆, R₇, R₉ = H ou un groupe alkyle en C₁ à C₁₀, et/ou un atome d'halogène
VI : avec R₂ = OH, R₆ = OR₉, R₂, R₃, R₄, R₅, R₇, R₉ = H ou un groupe alkyle en C₁ à C₁₀, et/ou un atome d'halogène 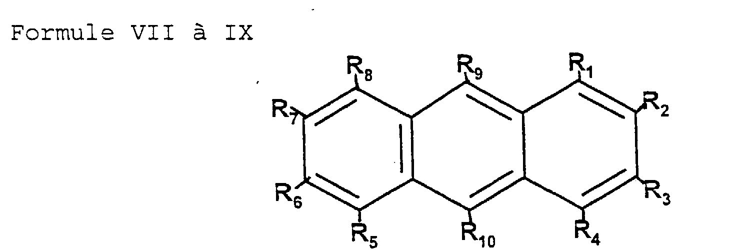
VII : avec R₁ = OH, R₄ = OR₁₁, R₂, R₃, R₅, R₆, R₇, R₈, R₉, R₁₀, R₁₁ = H ou un groupe alkyle en C₁ à C₁₀, et/ou un atome d'halogène
VIII: avec R₂ = OH, R₆ = OR₁₁, R₁, R₃, R₄, R₅, R₇, R₈, R₉, R₁₀, R₁₁ = H ou un groupe alkyle en C₁ à C₁₀, et/ou un atome d'halogène
IX : avec R₉ = OH, R₁₀ = OR₁₁, R₁, R₂, R₃, R₄, R₅, R₆, R₇ , R₈, R₁₁ = H ou un groupe alkyle en C₁ à C₁₀, et/ou un atome d'halogène 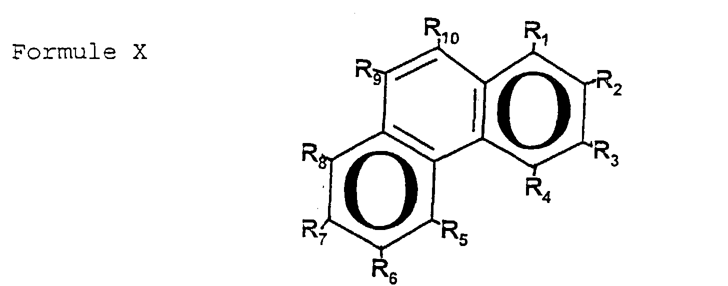
X : avec R₉ = OH, R₁₀ = OR₁₁, R₁, R₂, R₃, R₄, R₅, R₆, R₇, R₈, R₁₁ = H ou un groupe alkyle en C₁ à C₁₀, et/ou un atome d'halogène
et éventuellement des pigments et/ou charges et/ou stabilisants thermiques, de préférence des phosphates et/ou des additifs de tribologie et/ou d'autres additifs comme les agents rhéologiques et les agents de dégazage.

2. Masses de revêtement durcissables selon la revendication 1, caractérisées en ce que la part des composés (I) à (X), par rapport à la masse totale, est comprise entre 0,001% en poids et 10% en poids, de préférence entre 0,01 et 5% en poids.

3. Masses de revêtement durcissables selon la revendication 1 ou 2, caractérisées en ce que l'hydroquinone, la toluhydroquinone et la triméthylquinone sont préférées parmi les composés (I) à (X) .

4. Masses de revêtement durcissables selon l'une quelconque des revendications 1 à 3, caractérisées en ce que le β-hydroxyalkylamide a pour formule 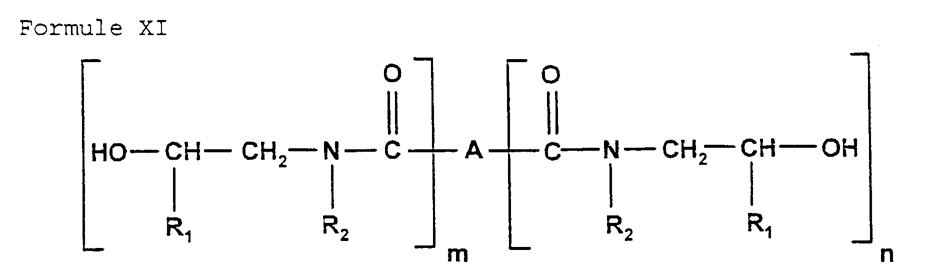 dans laquelle R₁ est un atome d'hydrogène ou un groupe alkyle en C₁ à C₅, R₂ est un atome d'hydrogène ou un groupe alkyle en C₁ à C₅, ou 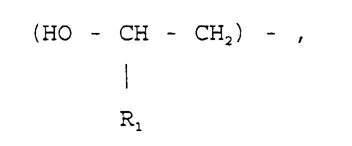 dans lequel R₁ prend la signification indiquée précédemment et A est une liaison chimique ou un groupe organique mono- ou polyvalent, dérivé de groupes hydrocarbonés saturés, insaturés ou aromatiques, y compris les groupes hydrocarbonés substitués ayant 2 à 20 atomes de carbone, m vaut de 1 à 2, n vaut de 0 à 2 et m+n vaut au moins 2.

5. Masses de revêtement durcissables selon l'une quelconque des revendications 1 à 4, caractérisées en ce que les β-hydroxyalkylamides particulièrement préférés sont:
- le bis [N,N'-di(β-hydroxyéthyl)]-adipamide
- le bis[N,N'-di(β-hydroxypropyl)]-adipamide.

6. Procédé pour produire des laques en poudre, caractérisé en ce que l'on produit dans la masse fondue un extrudat au moyen d'une extrusion commune de tous les composants de la formulation des masses de revêtement selon l'une quelconque des revendications 1 à 5, ainsi que des pigments et/ou charges et/ou additifs supplémentaires habituels à des températures comprises entre 60 et 140°C, puis on le refroidit, on le broie et on le crible à une granulométrie < 90 µm.

7. Utilisation des masses de revêtement selon l'une quelconque des revendications 1 à 6 en tant que couches protectrices.
